# EUROPEAN PATENT APPLICATION

(11) **EP 4 832 303 A1**
(43) Date of publication of application: **28.10.2026**
(21) Application number: 24906820.6
(22) Date of filing: 22.08.2024
(51) Int. Cl.: H02J 13/00, H02J 7/00

(54) **COMMUNICATION MONITORING METHOD, COMMUNICATION MONITORING DEVICE, AND COMMUNICATION MONITORING PROGRAM**

(30) Priority: 19.12.2023 JP 2023213616
(71) Applicant: Panasonic Intellectual Property Management Co., Ltd., Kadoma-shi, Osaka 571-0057 (JP)
(72) Inventor: ADACHI, Takahiro, Kadoma-shi, Osaka 571-8501 (JP); YAMAGUCHI, Takahiro, Kadoma-shi, Osaka 571-8501 (JP)
(74) Representative: Grünecker Patent- und Rechtsanwälte PartG mbB
(86) International application number: PCT/JP2024/029781
(87) International publication number: WO 2025/134430

(57) **Abstract**

A communication monitoring method according to an embodiment is a communication monitoring method executed by a communication monitoring apparatus (80) configured to monitor communication information in a charging system (1) includes a charger (60) configured to supply power to a mobile body (5), and is connected to a power grid (4). The communication monitoring method includes: a power supply-demand tightness determination step of determining a degree of power supply-demand tightness of the power grid (4) connected to the charging system (1); and an abnormality determination step of determining abnormality of the communication information based on the degree of power supply-demand tightness.

## Description

### TECHNICAL FIELD

The present disclosure relates to a communication monitoring method, a communication monitoring apparatus, and a communication monitoring program.

### BACKGROUND ART

There is known a charging system such as an Electric Vehicle (EV) charging station equipped with a charger. The charging system supplies power to a vehicle connected to the charger to charge a battery, etc. (refer to Patent Document 1, for example). There is also disclosed another technique of further stabilizing a power grid connected to the charging system in a chargeable/dischargeable manner along with the supply of power to an electric vehicle by the charging system. Examples of disclosed techniques include a technique of causing a charging system to execute a demand response in consideration of responsiveness of a mobile body to be charged (refer to Patent Document 2, for example).

### CITATION LIST

### Patent Literature

Patent Document 1: JP 2023-006755 A
Patent Document 2: JP 2022-116975 A

### SUMMARY OF INVENTION

### PROBLEMS TO BE SOLVED BY THE INVENTION

Here, there is a possibility that a power grid connected to a charging system becomes unstable due to a cyber-attack, etc. on the charging system. However, the known technologies have not examined a communication abnormality that exists in the charging system and can affect the power grid.

A problem to be solved by the present disclosure is to provide a communication monitoring method, a communication monitoring apparatus, and a communication monitoring program capable of detecting a communication abnormality that exists in a charging system and can affect a power grid.

### MEANS FOR SOLVING PROBLEM

A communication monitoring method according to the present disclosure is a communication monitoring method executed by a communication monitoring apparatus configured to monitor communication information in a charging system including a charger configured to supply power to a mobile body, the method including: a power supply-demand tightness determination step of determining a degree of power supply-demand tightness of a power grid connected to the charging system; and an abnormality determination step of determining abnormality of the communication information based on the degree of power supply-demand tightness.

### EFFECT OF THE INVENTION

With the communication monitoring method, the communication monitoring apparatus, and the communication monitoring program according to the present disclosure, it is possible to detect a communication abnormality that exists in the charging system and can affect the power grid.

### BRIEF DESCRIPTION OF DRAWINGS

FIG. 1 is a schematic diagram of an example of a power system according to an embodiment;
FIG. 2 is a block diagram of an example of a functional configuration of a system controller;
FIG. 3 is a schematic diagram of an example of a data configuration of a switching rule DB;
FIG. 4 is a functional block diagram of an example of a functional configuration of a communication monitoring apparatus;
FIG. 5A is a schematic diagram of an example of a data configuration of a supply-demand tightness log;
FIG. 5B is a schematic diagram of an example of a data configuration of a device condition management DB;
FIG. 5C is a schematic diagram of an example of a data configuration of an abnormality determination rule DB;
FIG. 6 is a schematic diagram of an example of a display screen;
FIG. 7 is a flowchart illustrating an example of a flow of information processing executed by a processing unit of the communication monitoring apparatus;
FIG. 8 is a sequence diagram illustrating an example of a flow of information processing executed in a charging system;
FIG. 9 is a sequence diagram illustrating an example of a flow of information processing executed in the charging system;
FIG. 10 is a sequence diagram illustrating an example of a flow of information processing executed in the charging system;
FIG. 11 is a sequence diagram illustrating an example of a flow of information processing executed in the charging system;
FIG. 12 is a sequence diagram illustrating an example of a flow of information processing executed in the charging system; and
FIG. 13 is a block diagram illustrating a hardware configuration example.

### DESCRIPTION OF EMBODIMENTS

Hereinafter, embodiments of a communication monitoring method, a communication monitoring apparatus, and a communication monitoring program according to the present disclosure will be described with reference to the accompanying drawings.

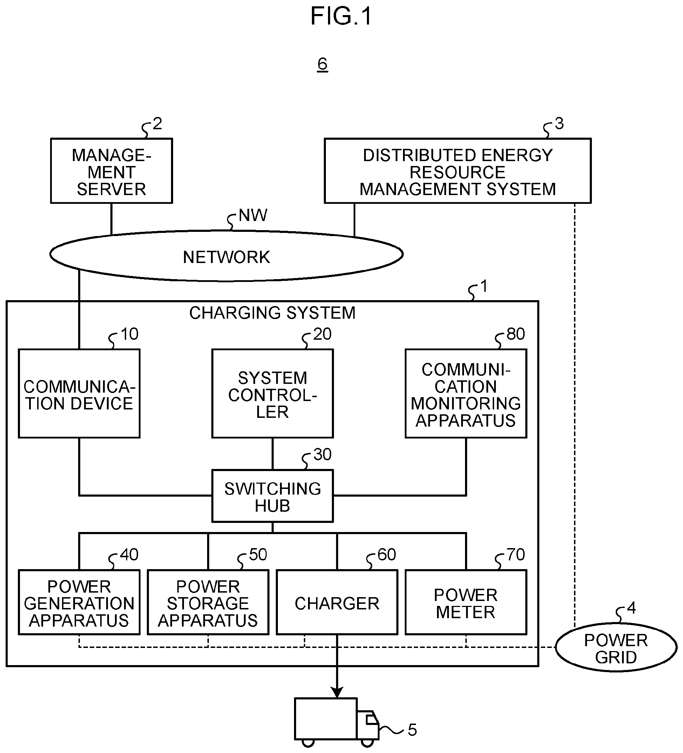

FIG. 1 is a schematic diagram of an example of a power system 6 according to the present embodiment.

The power system 6 includes a charging system 1, a management server 2, a distributed energy resource management system 3, and a power grid 4. The charging system 1, the management server 2, and the distributed energy resource management system 3 are communicably connected to each other via a network NW, etc. The distributed energy resource management system 3 and the power grid 4 are connected to each other so as to be able to monitor the power state of the power grid 4. In addition, the charging system 1 and the power grid 4 are connected to each other so as to be able to charge and discharge power.

The management server 2 is an information processing apparatus that integrally manages one or a plurality of charging systems 1. The management server 2 is managed by a management company, for example.

In the present embodiment, the management server 2 receives information such as a degree of power supply-demand tightness of the power grid 4 and a power generation plan from the distributed energy resource management system 3, and transmits system control information necessary for controlling the charging system 1 to the charging system 1 in accordance with the received information. In the present embodiment, the system control information includes at least information indicating the degree of power supply-demand tightness of the power grid 4.

The degree of power supply-demand tightness indicates the tightness of the power supply-demand in the power grid 4. In other words, the degree of power supply-demand tightness indicates the degree of power supply tightness due to an increase in power demand in the power grid 4, etc.

The distributed energy resource management system 3 monitors the condition of power supply-demand in the power grid 4, and outputs, to the management server 2, information indicating the degree of power supply-demand tightness corresponding to the monitored condition of power supply-demand. In addition, the distributed energy resource management system 3 controls the power grid 4 by managing predicted distribution of power obtained from a power plant or a consumer such as the charging system 1, and notifying the consumer of distributable power. The distributed energy resource management system 3 is managed by a power provider, for example.

The charging system 1 is a charging facility for supplying power to one or a plurality of mobile bodies 5. The charging system 1 may also be referred to as a charging station, a charging spot, a charging stand, etc.

The mobile body 5 is an object that moves using power as motive power. The mobile body 5 may be any object as long as at least a part of the configuration electrically or physically operates using power as motive power, and is not limited to the object including a drive unit for positional movement. Examples of the mobile body 5 include an electric vehicle, a robot, a mobile terminal, a drone, etc. The present embodiment is described assuming a form in which the mobile body 5 is an electric vehicle.

The charging system 1 controls charging and discharging of at least one of the power grid 4 or the mobile body 5 based on the system control information received from the management server 2.

The charging system 1 includes a communication device 10, a system controller 20, a switching hub 30, a power generation apparatus 40, a power storage apparatus 50, a charger 60, a power meter 70, and a communication monitoring apparatus 80. The communication device 10, the system controller 20, the power generation apparatus 40, the power storage apparatus 50, the charger 60, the power meter 70, and the communication monitoring apparatus 80 are communicably connected to each other via a switching hub 30.

The communication device 10 is a communication device for communicating with an external apparatus of the charging system 1.

The system controller 20 is an information processing apparatus that manages charging and discharging of the charging system 1 based on the system control information received from the management server 2.

The switching hub 30 relays all the communication information transmitted and received in the charging system 1 between a transmission source and a transmission destination. In addition, the switching hub 30 executes mirroring processing of notifying the communication monitoring apparatus 80 of all communication information transmitted and received in the charging system 1.

The power generation apparatus 40 is a renewable energy power supply. The power generation apparatus 40 is a solar power generation apparatus, for example. In addition, the power generation apparatus 40 may be a renewable energy power source using an environment and resources existing in nature, such as geothermal heat, wind, and water. In the power generation apparatus 40, a plurality of types of renewable energy power sources may be mixed.

In the present embodiment, the power generation apparatus 40 transmits power generation rate information indicating the power generation rate of the power generation apparatus 40 to the system controller 20 every predetermined time or when having received a request for acquiring the power generation rate information from the system controller 20. The power generation rate is a ratio of a current power generation amount to a maximum power generation amount that can be generated by the power generation apparatus 40. The power generation apparatus 40 may transmit power generation amount information to the system controller 20 instead of the power generation rate.

In addition, under the control of the system controller 20, the power generation apparatus 40 is switched between a discharging state in which the power obtained by power generation is discharged to at least one of the power storage apparatus 50, the charger 60, or the power grid 4, and a discharging restriction state in which the power is discarded without being discharged.

The power storage apparatus 50 is an apparatus including a storage battery that performs charging of power and discharging of power. The power storage apparatus 50 is charged with power generated by the power generation apparatus 40, power supplied from the power grid 4, etc. In addition, the power storage apparatus 50 discharges the charged power to the mobile body 5 or the power grid 4 via the charger 60.

In the present embodiment, under the control of the system controller 20, the power storage apparatus 50 is switched between a charging state in which power is charged and a discharging state in which power is discharged to at least one of the charger 60 or the power grid 4. In addition, the power storage apparatus 50 transmits charging rate information indicating the storage battery charging rate in the power storage apparatus 50 to the system controller 20 at predetermined time intervals, at predetermined timing such as after switching of the charging/discharging states, or when having received a request for acquiring the charging rate information from the system controller 20. The charging rate is a ratio of a current charge amount to a maximum power amount that can be stored in the storage battery. The power storage apparatus 50 may transmit charge amount information to the system controller 20 instead of the charging rate. The charge amount may also be referred to as a power storage amount.

The charger 60 is a device for supplying power supplied from at least one of the power storage apparatus 50 or the power grid 4 to the mobile body 5 to charge the mobile body 5. The charger 60 supplies power supplied from at least one of the power grid 4, the power storage apparatus 50, or the power generation apparatus 40 to the mobile body 5 in accordance with the billing condition of a service user, etc. who operates the mobile body 5, for example.

In the present embodiment, under the control of the system controller 20, the charger 60 is switched between a fast charging state in which fast charging is executable and a standard charging state in which standard charging is executable but fast charging is prohibited.

The fast charging is a charging state in which power equal to or greater than a first threshold is supplied from the charger 60 to the mobile body 5. The standard charging is a charging state in which power less than the first threshold is supplied from the charger 60 to the mobile body 5. The first threshold is to be preferably preset in accordance with the type, etc. of the mobile body 5 that can be supported by the charger 60. In addition, the first threshold may be appropriately changeable by an operation instruction of the system controller 20 from the user, system control information received from the management server 2, etc.

With fast charging, high power is supplied from the charger 60 to the mobile body 5 in a shorter time than in the standard state, and the mobile body 5 is charged in a shorter time than in the standard state until the mobile body 5 is fully charged.

The power meter 70 measures the power amount of the charging system 1. Specifically, the power meter 70 measures the total power consumption per unit time consumed in the charging system 1, the power amount supplied from the power grid 4 to the charging system 1 per unit time, etc. In addition, the power meter 70 transmits a power measurement result to the system controller 20 every predetermined time or when having received a power measurement result acquisition request information from the system controller 20.

The communication monitoring apparatus 80 is an information processing apparatus that monitors communication information in the charging system 1 connected to the power grid 4. The communication information is information exchanged by communication in the charging system 1, and may be any of a packet, a signal, a command, etc.

Next, a functional configuration of the system controller 20 will be described.

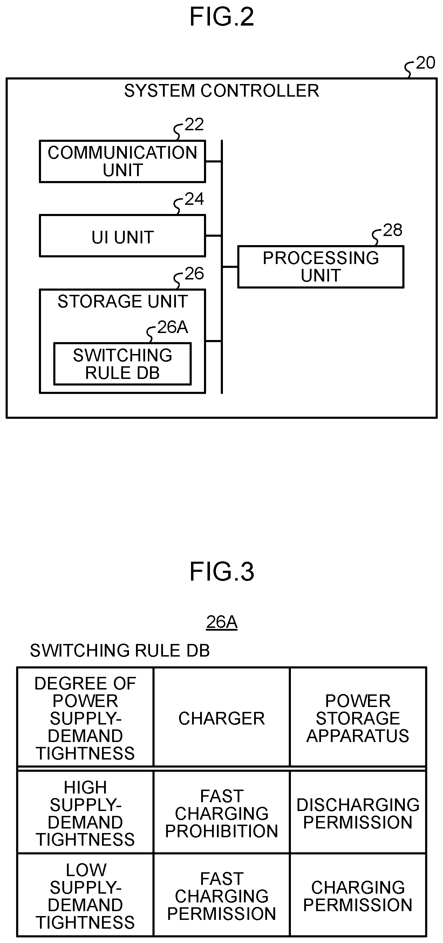

FIG. 2 is a block diagram of an example of a functional configuration of the system controller 20.

The system controller 20 includes a communication unit 22, a user interface (UI) unit 24, a storage unit 26, and a processing unit 28. The communication unit 22, the UI unit 24, the storage unit 26, and the processing unit 28 are communicably connected to each other via a bus, etc.

The communication unit 22 is a communication function unit for communicating with various types of devices and apparatuses in the charging system 1. The UI unit 24 has a display function and an input function. The display function displays various types of information. The display function is implemented as a display, a projection device, for example. The input function receives an operation input by the user. The input function is implemented as a pointing device such as a mouse and a touch pad, a keyboard, for example. The display function and the input function may be integrated to form a touch panel The storage unit 26 stores various types of information.

The UI unit 24 and the storage unit 26 only needs to be communicably connected to the processing unit 28 by a wired or wireless connection. At least one of the UI unit 24 or the storage unit 26 may be provided outside the system controller 20 or the charging system 1, and at least one of the UI unit 24 or the storage unit 26 may be connected to the processing unit 28 via the network NW, etc.

The storage unit 26 stores various types of data. In the present embodiment, the storage unit 26 stores a switching rule database (DB) 26A in advance. The data configuration of the switching rule DB 26A is not limited to the database.

FIG. 3 is a schematic diagram of an example of a data configuration of the switching rule DB 26A.

The switching rule DB 26A is information that predefines switching rules of states of the charger 60 and the power storage apparatus 50. The switching rule DB 26A is a database that associates the degree of power supply-demand tightness with instruction information to each of the charger 60 and the power storage apparatus 50.

The switching rule DB 26A predefines switching rules for maintaining the power grid 4 in a stable state in accordance with the degree of power supply-demand tightness.

Specifically, the switching rule DB 26A defines that, in a case where the degree of power supply-demand tightness indicates a high supply-demand tightness, fast charging prohibition instruction information for instructing fast charging prohibition to the charger 60 is to be transmitted, and discharging permission instruction information for instructing discharging permission to the power storage apparatus 50 is to be transmitted. In addition, the switching rule DB 26A defines that, in a case where the degree of power supply-demand tightness indicates a low supply-demand tightness, fast charging permission instruction information for instructing fast charging permission to the charger 60 is to be transmitted, and charging permission instruction information for instructing charging permission to the power storage apparatus 50 is to be transmitted.

The high supply-demand tightness indicates that the degree of power supply-demand tightness of the power grid 4 is equal to or higher than a predetermined supply-demand tightness. The low supply-demand tightness indicates that the degree of power supply-demand tightness of the power grid 4 is less than the predetermined supply-demand tightness. The value of the predetermined supply-demand tightness is to be preferably preset in accordance with a threshold, etc. regarding whether charging and discharging of the charging system 1 affects the degree of power supply-demand tightness of the power grid 4. In addition, the value of the predetermined supply-demand tightness may be appropriately changeable in accordance with an operation instruction of the UI unit 24 by the user, a predetermined supply-demand tightness change instruction included in the system control information received from the management server 2, etc.

The switching rule DB 26A may further define a switching rule of the state of the power generation apparatus 40. In this case, the switching rule DB 26A is to preferably define that the discharging permission instruction information for instructing discharging permission to the power generation apparatus 40 is to be transmitted in a case where the degree of power supply-demand tightness indicates the high supply-demand tightness, and that the power generation permission instruction information for instructing power generation permission to the power generation apparatus 40 is to be transmitted in a case where the degree of power supply-demand tightness indicates the low supply-demand tightness.

The processing unit 28 executes information processing in the system controller 20. The processing unit 28 causes a processor such as a Central Processing Unit (CPU) to execute a program, that is, executes the information processing by software.

In the present embodiment, the processing unit 28 manages charging and discharging of the charging system 1 by transmitting the above various types of instruction information to the devices in the charging system 1 based on the switching rule DB 26A in accordance with the degree of supply-demand tightness of the power grid 4.

Next, a functional configuration of the communication monitoring apparatus 80 will be described.

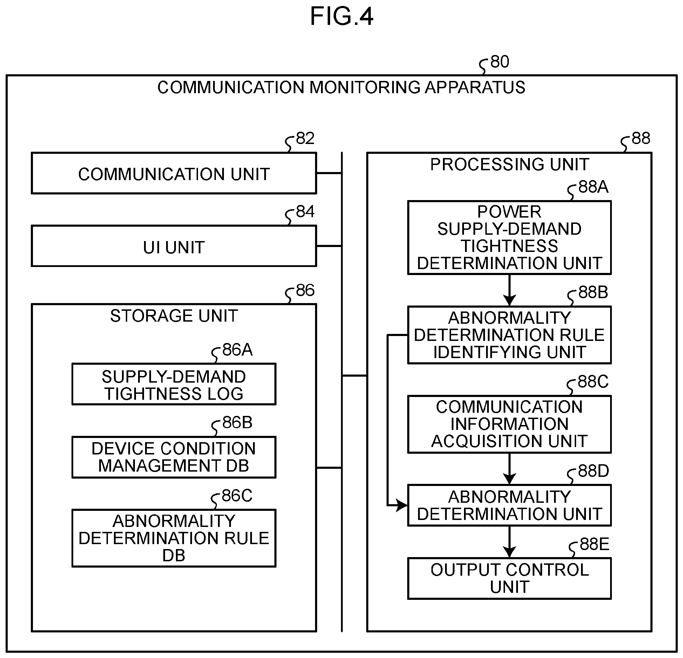

FIG. 4 is a functional block diagram of an example of a functional configuration of the communication monitoring apparatus 80.

The communication monitoring apparatus 80 includes a communication unit 82, a UI unit 84, a storage unit 86, and a processing unit 88. The communication unit 82, the UI unit 84, the storage unit 86, and the processing unit 88 are communicably connected to each other via a bus, etc.

The communication unit 82 is a communication function unit for communicating with various types of devices and apparatuses in the charging system 1. The UI unit 84 has a display function and an input function. The display function and the input function are similar to those described above. The storage unit 86 stores various types of information.

The UI unit 84 and the storage unit 86 only needs to be communicably connected to the processing unit 88 by a wired or wireless connection. At least one of the UI unit 84 or the storage unit 86 may be provided outside the communication monitoring apparatus 80 or the charging system 1, and at least one of the UI unit 84 or the storage unit 86 may be communicably connected to the processing unit 88 via the network NW, etc.

The storage unit 86 stores various types of data. In the present embodiment, the storage unit 86 stores a supply-demand tightness log 86A, a device condition management DB 86B, and an abnormality determination rule DB 86C.

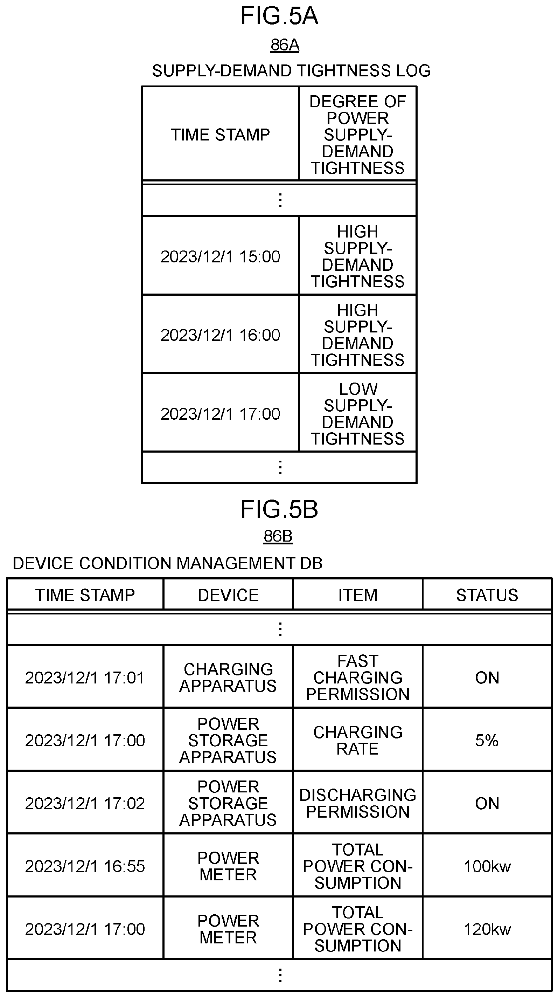

FIG. 5A is a schematic diagram of an example of a data configuration of the supply-demand tightness log 86A.

The supply-demand tightness log 86A is data that records the degree of power supply-demand tightness of the power grid 4 in time series. For example, the supply-demand tightness log 86A is data that associates the time stamp with the degree of power supply-demand tightness of the power grid 4 at the date and time indicated by the time stamp. The supply-demand tightness log 86A is updated every time the degree of power supply-demand tightness is determined by processing of the processing unit 88 described below.

FIG. 5B is a schematic diagram of an example of a data configuration of the device condition management DB 86B.

The device condition management DB 86B is data that stores transitions of conditions of devices included in the charging system 1 in time series. Specifically, the device condition management DB 86B is a database in which the conditions of the power generation apparatus 40, the power storage apparatus 50, the charger 60, and the power meter 70, which are the devices included in the charging system 1, are recorded in association with time stamps. The data format of the device condition management DB 86B is not limited to the database.

Specifically, the device condition management DB 86B registers a time stamp, identification information of a device, an item, and a status in association with each other. FIG. 5B illustrates, as an example, the name of the device, as the identification information of the device. The item and the status indicate conditions of the corresponding device.

The item is an item indicating the condition of the device. Examples of the item indicating the condition include, but are not limited to, fast charging permission, fast charging prohibition, a charging rate, a power generation rate, discharging permission, charging permission, and total power consumption. The status is information indicating a specific condition of a corresponding item of a corresponding device. The device condition management DB 86B sequentially registers the latest conditions of the devices included in the charging system 1 by the processing of the processing unit 88 to be described below.

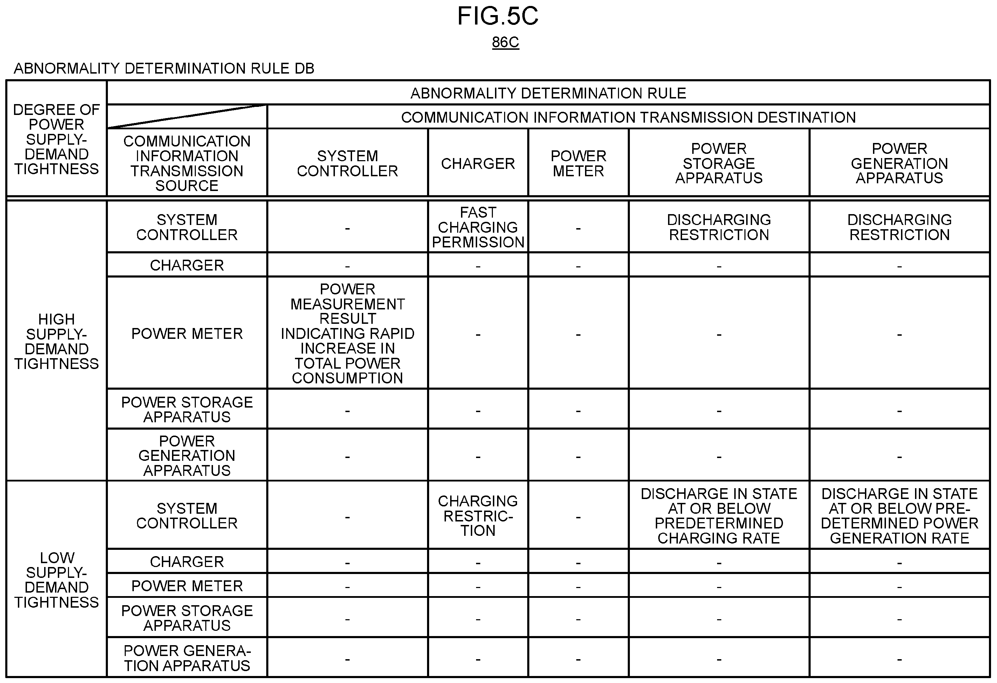

FIG. 5C is a schematic diagram of an example of a data configuration of the abnormality determination rule DB 86C.

The abnormality determination rule DB 86C is a database that associates the degree of power supply-demand tightness with the abnormality determination rule. Note that the data format of the abnormality determination rule DB 86C is not limited to the database.

The abnormality determination rule is information defining a rule for making an abnormality determination on communication information exchanged by communication in the charging system 1. The abnormality determination rule DB 86C pre-registers, for each degree of power supply-demand tightness, a rule for making an abnormality determination on the communication information that causes the power grid 4 to be in an unstable state.

In the present embodiment, the abnormality determination rules corresponding to each of the high supply-demand tightness and the low supply-demand tightness is pre-registered as the degree of power supply-demand tightness in the abnormality determination rule DB 86C. Note that the abnormality determination rules may be registered in the abnormality determination rule DB 86C for each supply-demand tightness obtained by subdividing the degree of power supply-demand tightness into three or more stages.

In the present embodiment, as abnormality determination rules corresponding to each of the high supply-demand tightness and the low supply-demand tightness, a transmission source of communication information, a transmission destination of communication information, and the above communication content for making an abnormality determination on the communication information transmitted from the transmission source to the transmission destination are pre-registered in the abnormality determination rule DB 86C in association with each other.

The abnormality determination rule corresponding to the high supply-demand tightness is a rule defining, as abnormal, communication information related to at least one of an increase in power consumption of the charging system 1 or restriction on discharging from the charging system 1 to the power grid 4.

The abnormality determination rule corresponding to the high supply-demand tightness defines, as abnormal, communication information related to at least one piece of communication content among fast charging permission of supplying power equal to or greater than the first threshold from the charger 60 to the mobile body 5, discharging restriction on the power storage apparatus 50 provided in the charging system 1, discharging restriction on the power generation apparatus 40 provided in the charging system 1, and a power measurement result indicating a rapid increase in the total power consumption in the charging system 1.

For more details, the abnormality determination rule corresponding to the high supply-demand tightness defines, as abnormal, communication information related to at least one of a case where the communication content transmitted from the system controller 20 to the charger 60 is the fast charging permission of supplying power equal to or greater than the first threshold from the charger 60 to the mobile body 5, a case where the communication content transmitted from the system controller 20 to the power storage apparatus 50 is the discharging restriction on the power storage apparatus 50 provided in the charging system 1, a case where the communication content transmitted from the system controller 20 to the power generation apparatus 40 is the discharging restriction on the power generation apparatus 40 provided in the charging system 1, or a case where the communication content transmitted from the power meter 70 to the system controller 20 is the power measurement result indicating a rapid increase in the total power consumption in the charging system 1.

The rapid increase in the total power consumption indicates that the total power consumption per unit time in the charging system 1 increases by at least a second threshold. The second threshold is to be preferably preset in accordance with a threshold, etc. as to whether an increase in the total power consumption in the charging system 1 affects the degree of power supply-demand tightness of the power grid 4. In addition, the second threshold may be appropriately changeable in accordance with system control information received from the management server 2, an operation instruction of the system controller 20 by the user, etc.

The abnormality determination rule corresponding to the low supply-demand tightness is a rule defining, as abnormal, communication information related to at least one of power consumption suppression of the charging system 1 or an increase in discharging power from the charging system 1 to the power grid 4.

The abnormality determination rule corresponding to the low supply-demand tightness defines, as abnormal, communication information related to at least one piece of communication content among the restriction on charging from the charger 60 to the mobile body 5, the discharging from the power storage apparatus 50 in a state in which the charging rate is equal to or less than a predetermined charging rate, or the discharging from the power generation apparatus 40 in which the power generation rate is equal to or less than a predetermined power generation rate.

Specifically, the abnormality determination rule corresponding to the low supply-demand tightness defining, as abnormal, communication information related to at least one of a case where the communication content transmitted from the system controller 20 to the charger 60 is the restriction on charging from the charger 60 to the mobile body 5, a case where the communication content transmitted from the system controller 20 to the power storage apparatus 50 is discharging from the power storage apparatus 50 in a state in which the charging rate is equal to or less than a predetermined charging rate, or a case where the communication content transmitted from the system controller 20 to the power generation apparatus 40 is discharging from the power generation apparatus 40 in which the power generation rate is equal to or less than a predetermined power generation rate.

The predetermined charging rate is to be preferably preset to a value equal to or greater than a minimum charging rate at which minimum power necessary for maintaining the function of the charging system 1 can be supplied from the power storage apparatus 50 into the charging system 1. In addition, the predetermined charging rate may be appropriately changeable by a user who operates the system controller 20, system control information received from the management server 2, etc.

The predetermined power generation rate is to be preferably preset to a value equal to or greater than a minimum power generation rate at which minimum power necessary for maintaining the function of the charging system 1 can be supplied from the power generation apparatus 40 into the charging system 1. In addition, the predetermined power generation rate may be appropriately changeable by a user who operates the system controller 20, system control information received from the management server 2, etc.

Description will be continued with reference to FIG. 4 again.

The processing unit 88 executes information processing in the communication monitoring apparatus 80. The processing unit 88 includes a power supply-demand tightness determination unit 88A, an abnormality determination rule identifying unit 88B, a communication information acquisition unit 88C, an abnormality determination unit 88D, and an output control unit 88E.

The power supply-demand tightness determination unit 88A, the abnormality determination rule identifying unit 88B, the communication information acquisition unit 88C, the abnormality determination unit 88D, and the output control unit 88E are implemented by, for example, one or a plurality of processors. For example, each of the above units may be implemented by causing a processor such as a Central Processing Unit (CPU) to execute a program, that is, by software. Each of the above units may be implemented by a processor such as a dedicated IC, that is, hardware. Each of the above units may be implemented by using software and hardware in combination. In the case of using a plurality of processors, each processor may implement one of the individual units, or may implement two or more of the individual units. In addition, at least one of the above-described units may be provided in an external apparatus communicably connected to the processing unit 88.

The power supply-demand tightness determination unit 88A determines the degree of power supply-demand tightness of the power grid 4. The power supply-demand tightness determination unit 88A determines the degree of power supply-demand tightness of the power grid 4 by using information indicating the degree of power supply-demand tightness included in the system control information received from the management server 2 via the communication device 10 and the switching hub 30.

In the present embodiment, the power supply-demand tightness determination unit 88A determines whether the degree of power supply-demand tightness of the power grid 4 is the high supply-demand tightness or the low supply-demand tightness.

The distributed energy resource management system 3 may output, to the management server 2, power supply-demand state information indicating the state of power supply-demand in the power grid 4. In this case, the management server 2 transmits system control information including the power supply-demand state information to the charging system 1. The power supply-demand tightness determination unit 88A may determine the degree of power supply-demand tightness of the power grid 4 by analyzing the power supply-demand state information included in the system control information. That is, the power supply-demand tightness determination unit 88A may determine the degree of power supply-demand tightness of the power grid 4 based on the power supply-demand state information indicating the state of the power supply-demand in the power grid 4.

The abnormality determination rule identifying unit 88B identifies, from the abnormality determination rule DB 86C, an abnormality determination rule corresponding to the degree of power supply-demand tightness determined by the power supply-demand tightness determination unit 88A.

The communication information acquisition unit 88C acquires communication information exchanged by communication in the charging system 1. The communication information acquisition unit 88C acquires the communication information in the charging system 1 by receiving the mirrored communication information from the switching hub 30.

The abnormality determination unit 88D determines abnormality of the communication information based on the degree of power supply-demand tightness of the power grid 4 connected to the charging system 1. Based on the abnormality determination rule identified by the abnormality determination rule identifying unit 88B, the abnormality determination unit 88D determines abnormality of the communication information acquired by the communication information acquisition unit 88C.

That is, in a case where the communication information satisfies the abnormality determination rule that corresponds to the degree of power supply-demand tightness, the abnormality determination unit 88D determines the communication information as abnormal. In addition, in a case where the communication information does not satisfy the abnormality determination rule that corresponds to the degree of power supply-demand tightness, the abnormality determination unit 88D determines the communication information as normal.

Specifically, in a case where the degree of power supply-demand tightness determined by the abnormality determination rule identifying unit 88B indicates the high supply-demand tightness and the communication information satisfies the abnormality determination rule corresponding to the high supply-demand tightness, the abnormality determination unit 88D determines the communication information as abnormal.

Specifically, in a case where the degree of power supply-demand tightness indicates the high supply-demand tightness, the abnormality determination unit 88D makes an abnormality determination on communication information related to at least one of fast charging permission on fast charging from the charger 60 to the mobile body 5, a discharging restriction on the power storage apparatus 50, a discharging restriction on the power generation apparatus 40, or a power measurement result indicating an increase in the total power consumption in the charging system 1 by at least the second threshold.

For example, in a case where the degree of power supply-demand tightness indicates the high supply-demand tightness, the abnormality determination unit 88D judges that the fast charging permission instruction information, which is the communication information transmitted from the system controller 20 to the charger 60, is information related to the "fast charging permission" on the charger 60 defined in the abnormality determination rule, and determines the communication information as abnormal. The fast charging permission instruction information is instruction information transmitted from the system controller 20 to the charger 60 when instructing the charger 60 to switch from the standard charging state to the fast charging state.

In addition, for example, in a case where the degree of power supply-demand tightness indicates the high supply-demand tightness, the abnormality determination unit 88D judges that the fast charging prohibition instruction information, which is the communication information transmitted from the system controller 20 to the charger 60, is not the information related to the "fast charging permission" on the charger 60 defined in the abnormality determination rule, and determines the communication information as normal. The fast charging prohibition instruction information is instruction information transmitted from the system controller 20 to the charger 60 when instructing the charger 60 to switch from the fast charging state to the standard charging state.

For example, in a case where the degree of power supply-demand tightness indicates the high supply-demand tightness, the abnormality determination unit 88D judges that the charging permission instruction information, which is communication information transmitted from the system controller 20 to the power storage apparatus 50, is information related to the "discharging restriction" on the power storage apparatus 50 defined in the abnormality determination rule, and determines the communication information as abnormal. The charging permission instruction information is instruction information transmitted from the system controller 20 to the power storage apparatus 50 when instructing the power storage apparatus 50 to switch from the discharging state to the charging state.

For example, in a case where the degree of power supply-demand tightness indicates the high supply-demand tightness, the abnormality determination unit 88D judges that the discharging permission instruction information, which is the communication information transmitted from the system controller 20 to the power storage apparatus 50, is not the information related to the "discharging restriction" on the power storage apparatus 50 defined in the abnormality determination rule, and determines the communication information as normal. The charging permission instruction information is instruction information transmitted from the system controller 20 to the power storage apparatus 50 when instructing the power storage apparatus 50 to switch from the power storage state to the discharging state.

In addition, for example, in a case where the degree of power supply-demand tightness indicates the high supply-demand tightness, the abnormality determination unit 88D judges that discard instruction information instructing discarding of the generated power or power generation prohibition instruction information instructing power generation prohibition, which is the communication information transmitted from the system controller 20 to the power generation apparatus 40, is the information related to the "discharging restriction" on the power generation apparatus 40 defined in the abnormality determination rule, and determines the communication information as abnormal.

In addition, for example, in a case where the degree of power supply-demand tightness indicates the high supply-demand tightness, the abnormality determination unit 88D judges that the power generation permission instruction information which is the communication information transmitted from the system controller 20 to the power generation apparatus 40 is not the information related to the "discharging restriction" on the power generation apparatus 40 defined in the abnormality determination rule, and determines the communication information as normal.

On the other hand, in a case where the degree of power supply-demand tightness determined by the abnormality determination rule identifying unit 88B indicates the low supply-demand tightness and the communication information satisfies the abnormality determination rule corresponding to the low supply-demand tightness, the abnormality determination unit 88D determines the communication information as abnormal.

Specifically, in a case where the degree of power supply-demand tightness indicates the low supply-demand tightness, the abnormality determination unit 88D makes an abnormality determination on the communication information related to at least one of the restriction on charging from the charger 60 to the mobile body 5, discharging of the power storage apparatus 50 in which the charging rate is equal to or less than a predetermined charging rate, and discharging of the power generation apparatus 40 in which the power generation rate is equal to or less than a predetermined power generation rate.

For example, in a case where the degree of power supply-demand tightness indicates the low supply-demand tightness, the abnormality determination unit 88D judges that the fast charging prohibition instruction information, which is the communication information transmitted from the system controller 20 to the charger 60, is the information related to the "charging restriction" on the charger 60 defined in the abnormality determination rule, and determines the communication information as abnormal.

In addition, for example, in a case where the degree of power supply-demand tightness indicates the low supply-demand tightness, the abnormality determination unit 88D judges that the fast charging permission instruction information, which is the communication information transmitted from the system controller 20 to the charger 60, is not the information related to the "charging restriction" defined in the abnormality determination rule, and determines the communication information as normal.

For example, in a case where the degree of power supply-demand tightness indicates the low supply-demand tightness, the abnormality determination unit 88D judges that the discharging permission instruction information, which is the communication information transmitted from the system controller 20 to the power storage apparatus 50 in which the charging rate is equal to or less than the predetermined charging rate, is the information related to the "discharge in a state at or below a predetermined charging rate" of the power storage apparatus 50 defined in the abnormality determination rule, and determines the communication information as abnormal.

For example, in a case where the degree of power supply-demand tightness indicates the low supply-demand tightness, the abnormality determination unit 88D judges that the charging permission instruction information, which is the communication information transmitted from the system controller 20 to the power storage apparatus 50 in which the charging rate is equal to or less than the predetermined charging rate, is not the information related to the "discharge in a state at or below a predetermined charging rate" of the power storage apparatus 50 defined in the abnormality determination rule, and determines the communication information as normal. In addition, the abnormality determination unit 88D judges that the discharging permission instruction information which is communication information transmitted from the system controller 20 to the power storage apparatus 50 in a state in which the charging rate exceeds the predetermined charging rate is not the information related to the "discharge in a state at or below a predetermined charging rate" of the power storage apparatus 50 defined in the abnormality determination rule, and determines the communication information as normal.

For example, in a case where the degree of power supply-demand tightness indicates the low supply-demand tightness, the abnormality determination unit 88D judges that the discharging permission instruction information is the communication information transmitted from the system controller 20 to the power generation apparatus 40 in which the power generation rate is equal to or less than the predetermined power generation rate is the information related to the "discharge in the state at or below a predetermined power generation rate" of the power generation apparatus 40 defined in the abnormality determination rule, and determines the communication information as abnormal.

For example, in a case where the degree of power supply-demand tightness indicates the low supply-demand tightness, the abnormality determination unit 88D judges that the discharging permission instruction information, which is the communication information transmitted from the system controller 20 to the power generation apparatus 40 in a state in which the power generation rate exceeds the predetermined charging rate, is not the information related to the "discharge in a state at or below a predetermined power generation rate" of the power generation apparatus 40 defined in the abnormality determination rule, and determines the communication information as normal.

The output control unit 88E outputs the determination result on the communication information obtained by the abnormality determination unit 88D.

For example, the output control unit 88E outputs a display screen indicating the determination result on the communication information obtained by the abnormality determination unit 88D to the UI unit 84. Note that the output control unit 88E may output the display screen to at least one of the UI unit 84, the UI unit 24 of the system controller 20, or an information processing terminal outside the charging system 1.

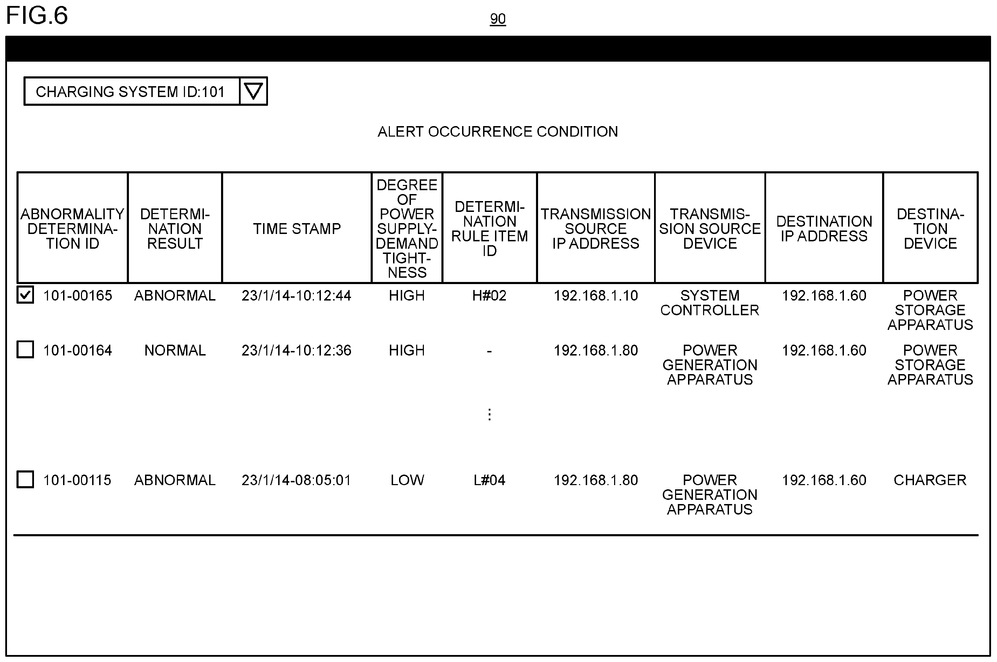

FIG. 6 is a schematic diagram of an example of a display screen 90 output by the output control unit 88E. For example, the output control unit 88E outputs the display screen 90 that associates abnormality determination ID, a determination result, a time stamp, determination rule item ID, a transmission source Internet Protocol (IP) address, a transmission source device, a destination IP address, and a destination device with each other.

The abnormality determination ID is identification information regarding the abnormality determination result on the communication information. The determination result is a determination result as to whether the communication information indicates abnormal or normal. The determination rule item ID is identification information of an abnormality determination rule that has been used for determination of communication information. The transmission source IP address is an IP address of a device as a transmission source of the communication information used for determination. The transmission source device is information indicating a device as a transmission source of the communication information used for determination. The destination IP address is an IP address of a device as a transmission destination of the communication information used for determination. The destination device is information indicating a device as a transmission destination of the communication information used for determination.

Note that the display screen 90 only needs to include at least the abnormality determination result of the communication information, and the display form is not limited to the form illustrated in FIG. 6.

In addition, the output control unit 88E may output the information related to the communication information determined to be abnormal in an output form emphasized as compared with the information related to the communication information determined to be normal. The emphasized output form only needs to be an output form having a high effect of attracting user's higher attention, such as a visual effect and an auditory effect. For example, the output control unit 88E displays the information related to the communication information determined to be abnormal in a display form such as a red color, a bold letter, or a blinking mode, and displays the information related to the communication information determined to be normal in a display form such as a black color, a thin letter, or a lit mode.

In addition, the output control unit 88E may output the information related to the communication information determined to be abnormal to a larger number of output devices as compared with the communication information determined to be normal. For example, the output control unit 88E may output the information related to the communication information determined to be normal only to the display of the UI unit 24, and may output the information related to the communication information determined to be abnormal to a plurality of output devices such as the display of the UI unit 24, a microphone included in the UI unit 24, the lamp included in the UI unit 24, the UI unit 24 of the system controller 20, and an external apparatus such as a mobile terminal connected via the network NW.

In addition, when the communication information is determined to be abnormal, the output control unit 88E may further execute processing related to recovery from the abnormality.

For example, when having determined the communication information as abnormal, the output control unit 88E may transmit disabling request information requesting disabling of the instruction indicated by the communication information to a device as a transmission destination of the communication information. Having received the disabling request information, the device is to preferably perform processing of invalidating the instruction indicated by the communication information received immediately before and validating an instruction indicated by another piece of communication information that has been received before receiving the communication information determined abnormal.

For example, here is an assumed case where communication information which is the fast charging permission instruction information received by the power storage apparatus 50 is judged to be abnormal, and the disabling request information is transmitted from the output control unit 88E to the power storage apparatus 50. In this case, the power storage apparatus 50 is to preferably execute processing of switching the fast charging state switched by the reception of the fast charging permission instruction information to the standard charging state.

In addition, for example, when having determined the communication information as abnormal, the output control unit 88E may control the switching hub 30, etc. to temporarily cut off communication between the system controller 20 and the device outside the system controller 20.

Next, an example of a flow of information processing executed by the processing unit 88 of the communication monitoring apparatus 80 according to the present embodiment will be described.

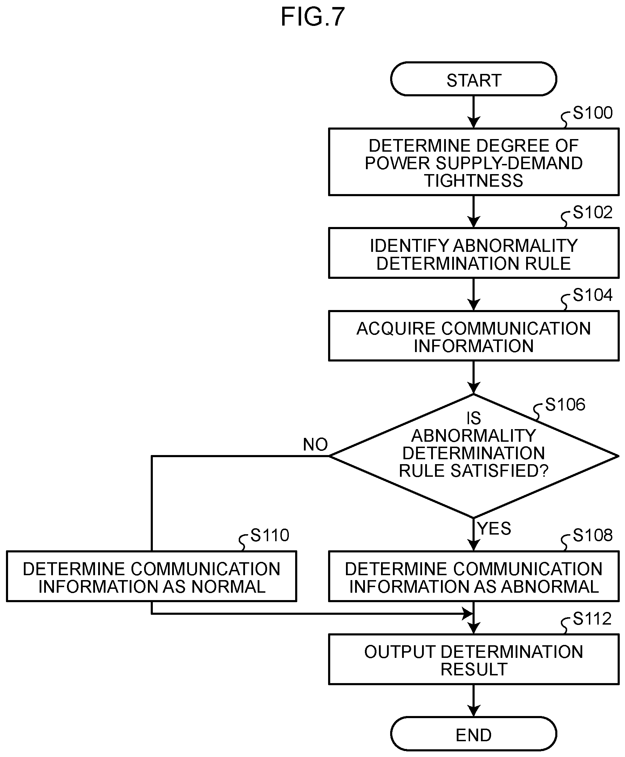

FIG. 7 is a flowchart illustrating an example of a flow of information processing executed by the processing unit 88 of the communication monitoring apparatus 80 according to the present embodiment.

The power supply-demand tightness determination unit 88A determines the degree of power supply-demand tightness of the power grid 4 (step S100). The abnormality determination rule identifying unit 88B identifies, from the abnormality determination rule DB 86C, an abnormality determination rule corresponding to the degree of power supply-demand tightness determined in step S100 (step S102).

The communication information acquisition unit 88C acquires communication information exchanged by communication in the charging system 1 (step S104).

The abnormality determination unit 88D judges whether the communication information acquired in step S104 satisfies the abnormality determination rule identified in step S102 (step S106). When having judged that the abnormality determination rule is satisfied (step S106: Yes), the abnormality determination unit 88D determines the communication information acquired in step S104 as abnormal (step S108). Subsequently, the process proceeds to step S112 described below. When having judged that the abnormality determination rule is not satisfied (step S106: No), the abnormality determination unit 88D determines the communication information acquired in step S104 as abnormal (step S108).

The output control unit 88E outputs the determination result of step S108 or step S110 (step S112). This completes the present routine.

The processing unit 88 of the communication monitoring apparatus 80 is to preferably execute the processing of steps S100 to S112 each time the new degree of power supply-demand tightness is determined or the new communication information is acquired from the switching hub 30.

Next, a flow of information processing executed in the charging system 1 will be described.

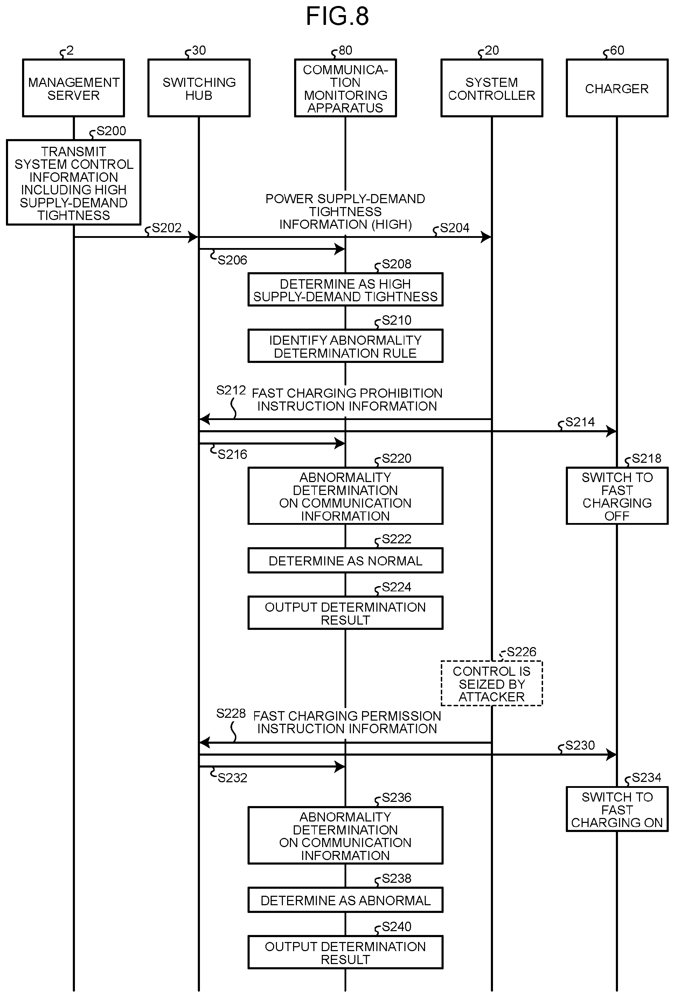

FIGS. 8 to 12 are sequence diagrams each illustrating an example of a flow of information processing executed in the charging system 1.

First, an example of monitoring of communication information exchanged by communication between the system controller 20 and the charger 60 in a case where the degree of power supply-demand tightness of the power grid 4 indicates the high supply-demand tightness will be described.

FIG. 8 illustrates, as an example, a flow of information processing in a case where the communication monitoring apparatus 80 monitors communication information between the system controller 20 and the charger 60 in a case where the degree of power supply-demand tightness of the power grid 4 indicates the high supply-demand tightness.

The management server 2 transmits system control information including power supply-demand tightness information indicating the degree of power supply-demand tightness of the high supply-demand tightness to the system controller 20 of the charging system 1 (step S200).

The switching hub 30 of the charging system 1 transmits the power supply-demand tightness information received from the management server 2 via the communication device 10 to the system controller 20 and the communication monitoring apparatus 80 as a mirroring destination (steps S202, S204, and S206).

Based on the received power supply-demand tightness information, the power supply-demand tightness determination unit 88A of the communication monitoring apparatus 80 determines that the degree of power supply-demand tightness of the power grid 4 is the high supply-demand tightness (step S208). The abnormality determination rule identifying unit 88B identifies, from the abnormality determination rule DB 86C, an abnormality determination rule corresponding to the high supply-demand tightness determined in step S208 (step S210).

Based on the switching rule DB 26A, the processing unit 28 of the system controller 20 transmits the fast charging prohibition instruction information, which is communication information for instructing "fast charging prohibition" corresponding to the high supply-demand tightness, to the charger 60 as a transmission destination (step S212). The switching hub 30 transmits the fast charging prohibition instruction information received from the system controller 20 to the charger 60 as a transmission destination and the communication monitoring apparatus 80 as a mirroring destination (steps S214 and S216).

The processing of step S214 causes the charger 60 to be switched to the fast charging OFF state in which the execution of the fast charging is prohibited (step S218). That is, the processing of step S218 causes the charger 60 to be switched from the fast charging state in which the fast charging is executable to the standard charging state in which the standard charging is executable but the fast charging is prohibited. In a case where the charger 60 has already been switched to the standard charging state before the processing of step S218, the charger 60 only needs to maintain the standard charging state.

The processing of step S216 allows the communication information acquisition unit 88C of the communication monitoring apparatus 80 to receive the fast charging prohibition instruction information as the communication information. The abnormality determination unit 88D of the communication monitoring apparatus 80 executes abnormality determination processing of judging whether the acquired communication information satisfies the abnormality determination rule identified in step S210 (step S220).

In a case where the degree of power supply-demand tightness indicates the high supply-demand tightness, the abnormality determination unit 88D judges that the fast charging prohibition instruction information, which is the communication information transmitted from the system controller 20 to the charger 60, is not the information related to the "fast charging permission" on the charger 60 defined in the abnormality determination rule, and determines the communication information as normal (step S222). The output control unit 88E outputs the determination result of step S222 to the display screen 90, etc. (step S224).

Here is an assumed case where the control of the system controller 20 is seized by an attacker, and the fast charging permission instruction information, which is communication information for instructing "fast charging permission" to the charger 60, is transmitted from the system controller 20 to the charger 60 as a transmission destination (steps S226 and S228).

The switching hub 30 transmits the fast charging permission instruction information received from the system controller 20 to the charger 60 as a transmission destination and the communication monitoring apparatus 80 as a mirroring destination (steps S230 and S232).

The processing of step S230 causes the charger 60 to be switched to the fast charge-on state in which the execution of the fast charging is permitted (step S234). That is, the processing of step S234 causes the charger 60 to be switched from the standard charging state in which the standard charging is executable but the fast charging is prohibited to the fast charging state in which the fast charging is executable.

The processing of step S232 allows the communication information acquisition unit 88C of the communication monitoring apparatus 80 to receive the fast charging permission instruction information as the communication information. The abnormality determination unit 88D of the communication monitoring apparatus 80 executes abnormality determination processing of judging whether the acquired communication information satisfies the abnormality determination rule identified in step S210 (step S236).

In a case where the degree of power supply-demand tightness indicates the high supply-demand tightness, the abnormality determination unit 88D judges that the fast charging permission instruction information, which is the communication information transmitted from the system controller 20 to the charger 60, is information related to the "fast charging permission" on the charger 60 defined in the abnormality determination rule, and determines the communication information as abnormal (step S238). The output control unit 88E outputs the determination result of step S238 to the display screen 90, etc. (step S240). This completes the present sequence.

Next, an example of monitoring of communication information exchanged by communication between the system controller 20 and the power storage apparatus 50 in a case where the degree of power supply-demand tightness of the power grid 4 indicates the high supply-demand tightness will be described.

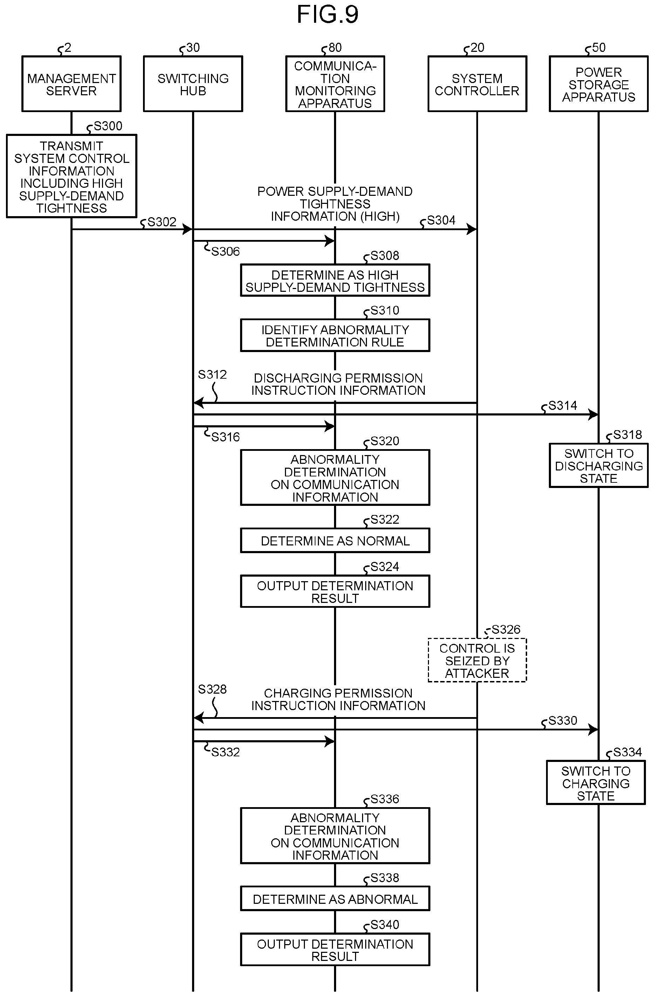

FIG. 9 illustrates, as an example, a flow of information processing in a case where the communication monitoring apparatus 80 monitors communication information between the system controller 20 and the power storage apparatus 50 in a case where the degree of power supply-demand tightness of the power grid 4 indicates the high supply-demand tightness.

The management server 2 transmits system control information including power supply-demand tightness information indicating the degree of power supply-demand tightness of the high supply-demand tightness to the system controller 20 of the charging system 1 (step S300).

The switching hub 30 of the charging system 1 transmits the power supply-demand tightness information received from the management server 2 via the communication device 10 to the system controller 20 and the communication monitoring apparatus 80 as a mirroring destination (steps S302, S304, and S306).

Based on the received power supply-demand tightness information, the power supply-demand tightness determination unit 88A of the communication monitoring apparatus 80 determines that the degree of power supply-demand tightness of the power grid 4 is the high supply-demand tightness (step S308). The abnormality determination rule identifying unit 88B identifies, from the abnormality determination rule DB 86C, an abnormality determination rule corresponding to the high supply-demand tightness determined in step S308 (step S310).

Based on the switching rule DB 26A, the processing unit 28 of the system controller 20 transmits the discharging permission instruction information, which is communication information for instructing "discharging permission" corresponding to the high supply-demand tightness, to the power storage apparatus 50 as a transmission destination (step S312). The switching hub 30 transmits the discharging permission instruction information received from the system controller 20 to the power storage apparatus 50 as a transmission destination and the communication monitoring apparatus 80 as a mirroring destination (steps S314 and S316).

Having received the discharging permission instruction information in step S314, the power storage apparatus 50 is switched from the charging state to the discharging state (step S318), that is, the processing in step S318 causes the power storage apparatus 50 to be switched to the discharging state in which power is discharged to at least one of the charger 60 or the power grid 4. In a case where the power storage apparatus 50 has been already switched to the discharging state before the processing of step S318, the power storage apparatus 50 only needs to maintain the discharging state.

The processing of step S316 allows the communication information acquisition unit 88C of the communication monitoring apparatus 80 to receive the discharging permission instruction information as the communication information. The abnormality determination unit 88D of the communication monitoring apparatus 80 executes abnormality determination processing of judging whether the acquired communication information satisfies the abnormality determination rule identified in step S310 (step S320).

In a case where the degree of power supply-demand tightness indicates the high supply-demand tightness, the abnormality determination unit 88D judges that the discharging permission instruction information, which is the communication information transmitted from the system controller 20 to the power storage apparatus 50, is not the information related to the "discharging restriction" on the power storage apparatus 50 defined in the abnormality determination rule, and determines the communication information as normal (step S322). The output control unit 88E outputs the determination result of step S322 to the display screen 90, etc. (step S324).

Here is an assumed case where the control of the system controller 20 is seized by an attacker, and the charging permission instruction information, which is communication information for instructing the power storage apparatus 50 to perform "charging permission", is transmitted from the system controller 20 to the power storage apparatus 50 as a transmission destination (steps S326 and S328).

The switching hub 30 transmits the charging permission instruction information received from the system controller 20 to the power storage apparatus 50 as a transmission destination and the communication monitoring apparatus 80 as a mirroring destination (steps S330 and S332).

Having received the charging permission instruction information in step S330, the power storage apparatus 50 is switched to the charging state in which power is charged (step S334). That is, the processing of step S334 causes the power storage apparatus 50 to be switched from the discharging state to the charging state.

The processing of step S332 allows the communication information acquisition unit 88C of the communication monitoring apparatus 80 to receive the charging permission instruction information as the communication information. The abnormality determination unit 88D of the communication monitoring apparatus 80 executes abnormality determination processing of judging whether the acquired communication information satisfies the abnormality determination rule identified in step S310 (step S336).

In a case where the degree of power supply-demand tightness indicates the high supply-demand tightness, the abnormality determination unit 88D judges that the charging permission instruction information, which is the communication information transmitted from the system controller 20 to the power storage apparatus 50, is the information related to the "discharging restriction" on the power storage apparatus 50 defined in the abnormality determination rule, and determines the communication information as abnormal (step S338). The output control unit 88E outputs the determination result of step S338 to the display screen 90, etc. (step S340). This completes the present sequence.

Next, an example of monitoring of communication information exchanged by communication between the system controller 20 and the power meter 70 in a case where the degree of power supply-demand tightness of the power grid 4 indicates the high supply-demand tightness will be described.

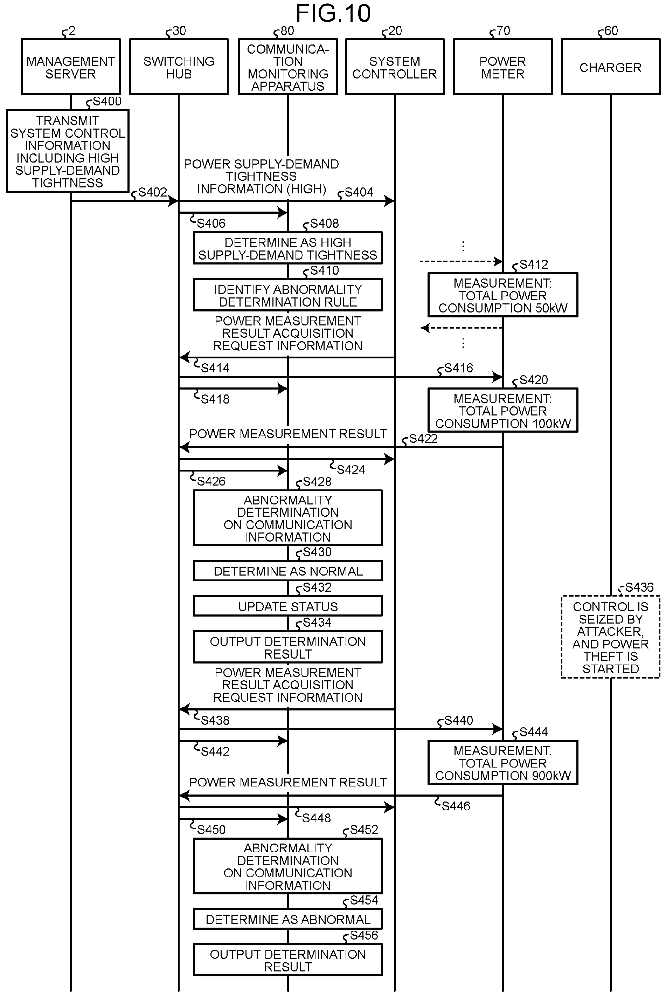

FIG. 10 illustrates, as an example, a flow of information processing in a case where the communication monitoring apparatus 80 monitors communication information between the system controller 20 and the power meter 70 in a case where the degree of power supply-demand tightness of the power grid 4 indicates the high supply-demand tightness.

The management server 2 transmits system control information including power supply-demand tightness information indicating the degree of power supply-demand tightness of the high supply-demand tightness to the system controller 20 of the charging system 1 (step S400).

The switching hub 30 of the charging system 1 transmits the power supply-demand tightness information received from the management server 2 via the communication device 10 to the system controller 20 and the communication monitoring apparatus 80 as a mirroring destination (steps S402, S404, and S406).

Based on the received power supply-demand tightness information, the power supply-demand tightness determination unit 88A of the communication monitoring apparatus 80 determines that the degree of power supply-demand tightness of the power grid 4 is the high supply-demand tightness (step S408). The abnormality determination rule identifying unit 88B identifies, from the abnormality determination rule DB 86C, an abnormality determination rule corresponding to the high supply-demand tightness determined in step S408 (step S410).

The description will be continued assuming a case, at this time, where the power meter 70 measures 50 kW as the total power consumption of the charging system 1 and sequentially outputs the power measurement result to the system controller 20 via the switching hub 30.

The processing unit 28 of the system controller 20 transmits the power measurement result acquisition request information as the communication information to the power meter 70 as a transmission destination (step S414). The switching hub 30 transmits the power measurement result acquisition request information received from the system controller 20 to the power meter 70 as a transmission destination and the communication monitoring apparatus 80 as a mirroring destination (steps S416 and S418).

Having received the power measurement result acquisition request information, the power meter 70 measures the total power consumption of the charging system 1 (step S420). The description will be continued assuming a case where the power meter 70 measures 100 kW as the total power consumption of the charging system 1, for example. The power meter 70 transmits the power measurement result to the system controller 20 as a transmission destination (step S422).

The switching hub 30 transmits the communication information as the power measurement result received from the power meter 70 to the system controller 20 as a transmission destination and the communication monitoring apparatus 80 as a mirroring destination (steps S424 and S426).

The processing of step S426 allows the communication information acquisition unit 88C of the communication monitoring apparatus 80 to receive the power measurement result as the communication information. The abnormality determination unit 88D of the communication monitoring apparatus 80 executes abnormality determination processing of judging whether the acquired communication information satisfies the abnormality determination rule identified in step S410 (step S428).

In a case where the degree of power supply-demand tightness indicates the high supply-demand tightness, based on the fact that the total power consumption indicated by the power measurement result, which is the communication information transmitted from the power meter 70 to the system controller 20, does not indicate a rapid increase, the abnormality determination unit 88D judges that the communication information is not information related to the "power measurement result indicating a rapid increase in total power consumption" defined in the abnormality determination rule, and determines the communication information as normal (step S430). The abnormality determination unit 88D is to preferably judge whether the total power consumption of the charging system 1 indicates a rapid increase, by judging, based on the device condition management DB 86B, whether the difference between the power value indicated by the status corresponding to the device "power meter" and the item "total power consumption" corresponding to the time stamp immediately before the reception time of the power measurement result received this occasion, and the power value indicated by the power measurement result received at this occasion, is equal to or greater than the second threshold.

The output control unit 88E updates the status in the device condition management DB 86B (step S432). Specifically, as a status corresponding to the item "total power consumption" at the device "power meter" in the device condition management DB 86B, the value of the power measurement result is recorded in association with the time stamp indicating the point of time of reception of the power measurement result. Subsequently, the output control unit 88E outputs the determination result of step S430 to the display screen 90 (step S434).

As described in step 412, every time the power measurement result is transmitted from the power meter 70 to the system controller 20, the processing of steps S422 to S434 is similarly executed.

Here is an assumed case where the control of the charger 60 is seized by the attacker and power theft from the charger 60 of the charging system 1 is started (step S436).

The case also includes an assumed scene, at this stage, in which the processing unit 28 of the system controller 20 transmits the power measurement result acquisition request information as the communication information to the power meter 70 as a transmission destination (step S438). The switching hub 30 transmits the power measurement result acquisition request information received from the system controller 20 to the power meter 70 as a transmission destination and the communication monitoring apparatus 80 as a mirroring destination (steps S440 and S442).

Having received the power measurement result acquisition request information, the power meter 70 measures the total power consumption of the charging system 1 (step S444). For example, the description will be continued assuming a case where the power meter 70 measures 900 kW as the total power consumption of the charging system 1. The power meter 70 transmits the power measurement result to the system controller 20 as a transmission destination (step S446).

The switching hub 30 transmits the communication information as the power measurement result received from the power meter 70 to the system controller 20 as a transmission destination and the communication monitoring apparatus 80 as a mirroring destination (steps S448 and S450).

The processing of step S450 allows the communication information acquisition unit 88C of the communication monitoring apparatus 80 to receive the power measurement result as the communication information. The abnormality determination unit 88D of the communication monitoring apparatus 80 executes abnormality determination processing of judging whether the acquired communication information satisfies the abnormality determination rule identified in step S410 (step S452).

In a case where the degree of power supply-demand tightness indicates the high supply-demand tightness, based on the fact that the total power consumption indicated by the power measurement result, which is the communication information transmitted from the power meter 70 to the system controller 20, indicates a rapid increase, the abnormality determination unit 88D judges that the communication information is not the information related to the "power measurement result indicating a rapid increase in total power consumption" defined in the abnormality determination rule, and determines the communication information as abnormal (step S454). The abnormality determination unit 88D is to preferably judge whether the total power consumption indicates a rapid increase, by judging whether the difference between the power value indicated by the status corresponding to the device "power meter" and the item "total power consumption" corresponding to the time stamp immediately before the reception time of the power measurement result received this occasion, and the power value indicated by the power measurement result received at this occasion, is equal to or greater than the second threshold.

When the communication information is judged to be abnormal, the output control unit 88E omits updating of the status in the device condition management DB 86B. Subsequently, the output control unit 88E outputs the determination result of step S454 to the display screen 90 (step S456). This completes the present sequence.

Next, an example of monitoring of communication information exchanged by communication between the system controller 20 and the charger 60 in a case where the degree of power supply-demand tightness of the power grid 4 indicates the low supply-demand tightness will be described.

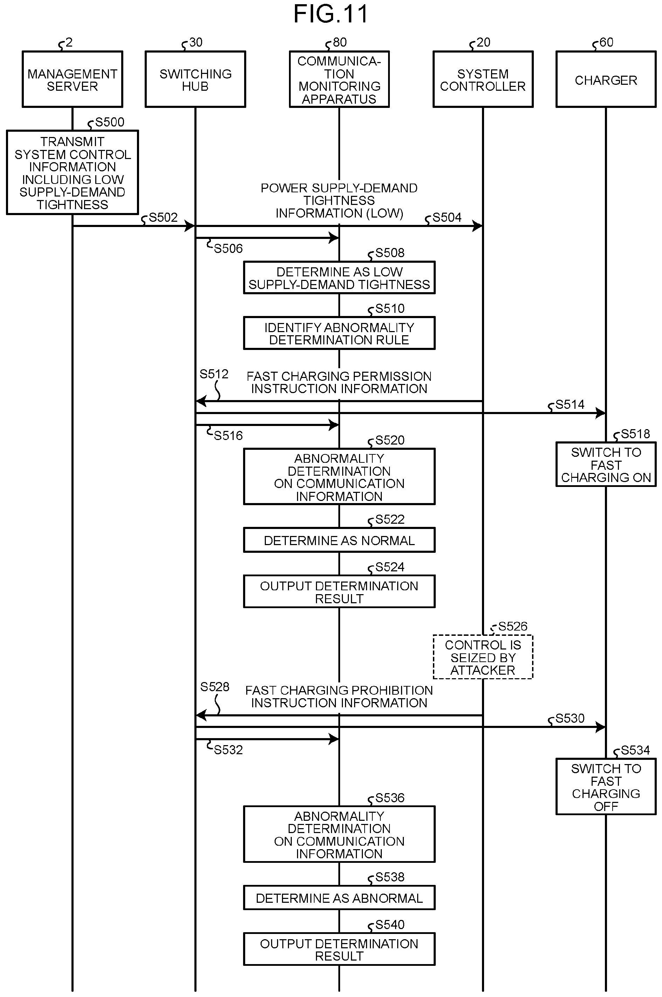

FIG. 11 illustrates, as an example, a flow of information processing in a case where the communication monitoring apparatus 80 monitors communication information between the system controller 20 and the charger 60 in a case where the degree of power supply-demand tightness of the power grid 4 indicates the low supply-demand tightness.

The management server 2 transmits system control information including power supply-demand tightness information indicating the degree of power supply-demand tightness of the low supply-demand tightness to the system controller 20 of the charging system 1 (step S500).

The switching hub 30 of the charging system 1 transmits the power supply-demand tightness information received from the management server 2 via the communication device 10 to the system controller 20 and the communication monitoring apparatus 80 as a mirroring destination (steps S502, S504, and S506).

Based on the received power supply-demand tightness information, the power supply-demand tightness determination unit 88A of the communication monitoring apparatus 80 determines that the degree of power supply-demand tightness of the power grid 4 is the low supply-demand tightness (step S508). The abnormality determination rule identifying unit 88B identifies, from the abnormality determination rule DB 86C, an abnormality determination rule corresponding to the low supply-demand tightness determined in step S508 (step S510).

Based on the switching rule DB 26A, the processing unit 28 of the system controller 20 transmits the fast charging permission instruction information, which is communication information for instructing "fast charging permission" corresponding to the low supply-demand tightness, to the charger 60 as a transmission destination (step S512). The switching hub 30 transmits the fast charging permission instruction information received from the system controller 20 to the charger 60 as a transmission destination and the communication monitoring apparatus 80 as a mirroring destination (steps S514 and S516).

The processing of step S514 causes the charger 60 to be switched to the fast charge-on state in which the execution of the fast charging is permitted (step S518). That is, the processing of step S518 causes the charger 60 to be switched from the standard charging state in which the standard charging is executable but the fast charging is prohibited to the fast charging state in which the fast charging is executable. In a case where the charger 60 has already been switched to the fast charging state before the processing of step S518, the charger 60 only needs to maintain the fast charging state.

The processing of step S516 allows the communication information acquisition unit 88C of the communication monitoring apparatus 80 to receive the fast charging permission instruction information as the communication information. The abnormality determination unit 88D of the communication monitoring apparatus 80 executes abnormality determination processing of judging whether the acquired communication information satisfies the abnormality determination rule identified in step S510 (step S520).

In a case where the degree of power supply-demand tightness indicates the low supply-demand tightness, the abnormality determination unit 88D judges that the fast charging permission instruction information, which is the communication information transmitted from the system controller 20 to the charger 60, is not the information related to the "charging restriction" on the charger 60 defined in the abnormality determination rule, and determines the communication information as normal (step S522). The output control unit 88E outputs the determination result of step S522 to the display screen 90, etc. (step S524).

Here is an assumed case where the control of the system controller 20 is seized by an attacker, and the fast charging prohibition instruction information, which is communication information for instructing "fast charging prohibition" to the charger 60, is transmitted from the system controller 20 to the charger 60 as a transmission destination (steps S526 and S528).

The switching hub 30 transmits the fast charging prohibition instruction information received from the system controller 20 to the charger 60 as a transmission destination and the communication monitoring apparatus 80 as a mirroring destination (steps S530 and S532).

The processing of step S530 causes the charger 60 to be switched to the fast charging OFF state in which the execution of the fast charging is prohibited (step S534). That is, the processing of step S534 causes the charger 60 to be switched from the fast charging state in which the fast charging is executable to the standard charging state in which the standard charging is executable but the fast charging is prohibited.

The processing of step S532 allows the communication information acquisition unit 88C of the communication monitoring apparatus 80 to receive the fast charging prohibition instruction information as the communication information. The abnormality determination unit 88D of the communication monitoring apparatus 80 executes abnormality determination processing of judging whether the acquired communication information satisfies the abnormality determination rule identified in step S510 (step S536).

In a case where the degree of power supply-demand tightness indicates the low supply-demand tightness, the abnormality determination unit 88D judges that the fast charging prohibition instruction information, which is the communication information transmitted from the system controller 20 to the charger 60, is the information related to the "charging restriction" on the charger 60 defined in the abnormality determination rule, and determines the communication information as abnormal (step S538). The output control unit 88E outputs the determination result of step S538 to the display screen 90, etc. (step S540). This completes the present sequence.

Next, an example of monitoring of communication information exchanged by communication between the system controller 20 and the power storage apparatus 50 in a case where the degree of power supply-demand tightness of the power grid 4 indicates the low supply-demand tightness will be described.

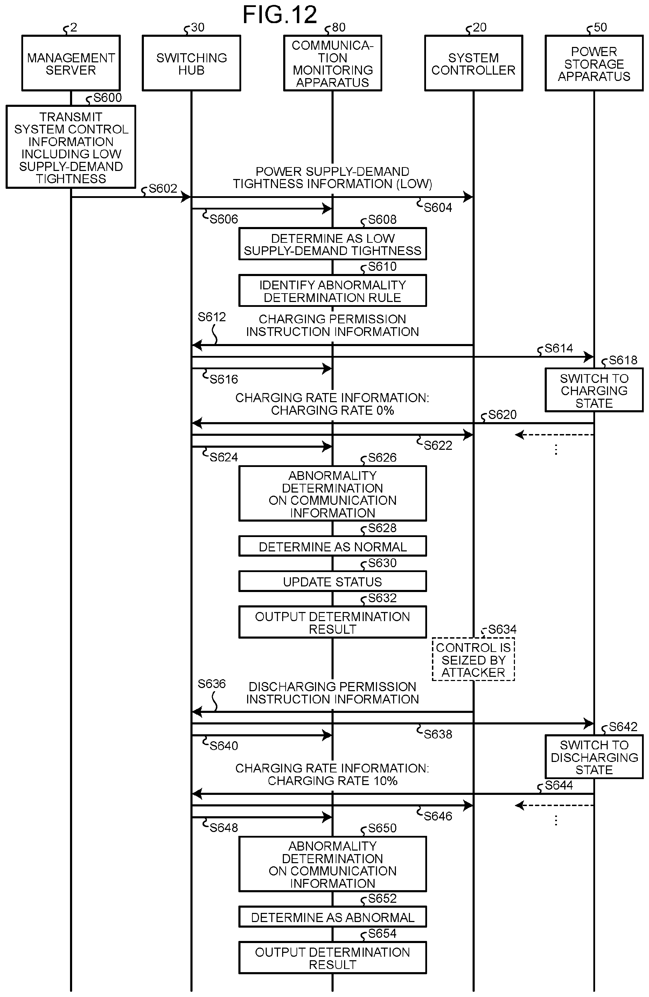

FIG. 12 illustrates, as an example, a flow of information processing in a case where the communication monitoring apparatus 80 monitors communication information between the system controller 20 and the power storage apparatus 50 in a case where the degree of power supply-demand tightness of the power grid 4 indicates the low supply-demand tightness.

The management server 2 transmits system control information including power supply-demand tightness information indicating the degree of power supply-demand tightness of the low supply-demand tightness to the system controller 20 of the charging system 1 (step S600).

The switching hub 30 of the charging system 1 transmits the power supply-demand tightness information received from the management server 2 via the communication device 10 to the system controller 20 and the communication monitoring apparatus 80 as a mirroring destination (steps S602, S604, and S606).

Based on the received power supply-demand tightness information, the power supply-demand tightness determination unit 88A of the communication monitoring apparatus 80 determines that the degree of power supply-demand tightness of the power grid 4 is the low supply-demand tightness (step S608). The abnormality determination rule identifying unit 88B identifies, from the abnormality determination rule DB 86C, an abnormality determination rule corresponding to the low supply-demand tightness determined in step S308 (step S610).

Based on the switching rule DB 26A, the processing unit 28 of the system controller 20 transmits the charging permission instruction information, which is communication information for instructing "charging permission" corresponding to the low supply-demand tightness, to the power storage apparatus 50 as a transmission destination (step S612). The switching hub 30 transmits the charging permission instruction information received from the system controller 20 to the power storage apparatus 50 as a transmission destination and the communication monitoring apparatus 80 as a mirroring destination (steps S614 and S616).

Having received the discharging permission instruction information in step S614, the power storage apparatus 50 is switched from the discharging state to the charging state (step S618), that is, the processing in step S618 causes the power storage apparatus 50 to be switched to the charging state. In a case where the power storage apparatus 50 has already been switched to the charging state before the processing of step S618, the power storage apparatus 50 only needs to maintain the charging state.

Subsequently, the power storage apparatus 50 transmits charging rate information indicating the storage battery charging rate to the system controller 20 as a transmission destination (step S620). As described above, the power storage apparatus 50 transmits the charging rate information to the system controller 20 at predetermined time intervals, etc. Here, the description will be given assuming a scene in which the power storage apparatus 50 transmits charging rate information indicating storage battery charging rate 0%. The switching hub 30 transmits the charging rate information received from the power storage apparatus 50 to the system controller 20 as a transmission destination and the communication monitoring apparatus 80 as a mirroring destination (steps S622 and S624).

On the other hand, the processing of step S616 allows the communication information acquisition unit 88C of the communication monitoring apparatus 80 to receive the charging permission instruction information as the communication information. In addition, the processing of step S624 allows the communication information acquisition unit 88C of the communication monitoring apparatus 80 to receive the charging rate information indicating the charging rate 0% as the communication information.

The abnormality determination unit 88D of the communication monitoring apparatus 80 executes abnormality determination processing of judging whether these pieces of acquired communication information satisfy the abnormality determination rule identified in step S610 (step S626).

In a case where the degree of power supply-demand tightness indicates the low supply-demand tightness, the abnormality determination unit 88D judges that the charging permission instruction information transmitted to the power storage apparatus 50 in the state in which the charging rate is 0%, which is the communication information transmitted from the system controller 20 to the power storage apparatus 50, is not the information related to the "discharge in a state at or below a predetermined charging rate" of the power storage apparatus 50 defined in the abnormality determination rule, and determines the communication information as normal (step S628).

The output control unit 88E updates the status in the device condition management DB 86B (step S630). Specifically, the output control unit 88E records the value of the charging rate indicated by the charging rate information in association with the time stamp which is the reception time of the charging rate information, as the status corresponding to the item "charging rate " of the "power storage apparatus" as the device in the device condition management DB 86B. Subsequently, the output control unit 88E outputs the determination result of step S628 to the display screen 90 (step S632).

Here is an assumed case where the control of the system controller 20 is seized by an attacker, and the discharging permission instruction information, which is communication information for instructing the power storage apparatus 50 to "discharging permission", is transmitted from the system controller 20 to the power storage apparatus 50 as a transmission destination (steps S634 and S636).

The switching hub 30 transmits the discharging permission instruction information received from the system controller 20 to the power storage apparatus 50 as a transmission destination and the communication monitoring apparatus 80 as a mirroring destination (steps S638 and S640).

With the reception of the discharging permission instruction information in step S638, the power storage apparatus 50 is switched to the discharging state in which the power is discharged to at least one of the charger 60 or the power grid 4 (step S642). That is, the processing of step S642 causes the power storage apparatus 50 to be switched from the charging state to the discharging state.

Subsequently, the power storage apparatus 50 transmits charging rate information indicating the charging rate of the storage battery to the system controller 20 as a transmission destination (step S644). As described above, the power storage apparatus 50 transmits the charging rate information to the system controller 20 at predetermined time intervals, etc. Here, the description will be given assuming a scene in which the power storage apparatus 50 transmits charging rate information indicating storage battery charging rate 10%. The switching hub 30 transmits the charging rate information received from the power storage apparatus 50 to the system controller 20 as a transmission destination and the communication monitoring apparatus 80 as a mirroring destination (steps S646 and S648).

On the other hand, the processing of step S640 allows the communication information acquisition unit 88C of the communication monitoring apparatus 80 to receive the discharging permission instruction information as the communication information. In addition, the processing of step S648 allows the communication information acquisition unit 88C of the communication monitoring apparatus 80 to receive the charging rate information indicating the charging rate 10% as the communication information.

The abnormality determination unit 88D of the communication monitoring apparatus 80 executes abnormality determination processing of judging whether these pieces of acquired communication information satisfy the abnormality determination rule identified in step S610 (step S650).

In a case where the degree of power supply-demand tightness indicates the low supply-demand tightness, the abnormality determination unit 88D judges that the discharging permission instruction information transmitted to the power storage apparatus 50 in the state in which the charging rate is 10%, which is the communication information transmitted from the system controller 20 to the power storage apparatus 50, is information related to the "discharge in a state at or below a predetermined charging rate" of the power storage apparatus 50 defined in the abnormality determination rule, and determines the communication information as abnormal (step S652). Here, the description will be given assuming a case where the predetermined charging rate is 15%.

The output control unit 88E outputs the determination result of step S652 to the display screen 90 (step S654). This completes the present sequence.

In the present embodiment, the communication monitoring apparatus 80 has been described as being provided in the charging system 1, but the configuration is not limited thereto. The communication monitoring apparatus 80 only needs to be provided in the power system 6 and only needs to be communicably connected to the charging system 1 via the network NW. That is, the communication monitoring apparatus 80 may be provided alone in the power system 6 or may be provided in the management server 2.

As described above, the communication monitoring method of the present embodiment is a communication monitoring method executed by the communication monitoring apparatus 80 that monitors communication information in the charging system 1 including the charger 60 that supplies power to the mobile body 5. The communication monitoring method includes: a power supply-demand tightness determination step of determining the degree of power supply-demand tightness of the power grid 4 connected to the charging system 1; and an abnormality determination step of determining abnormality of the communication information based on the degree of power supply-demand tightness.

Here, the known technologies have not examined a communication abnormality that exists in the charging system 1 and can affect the power grid 4. For example, the known technology has performed no examinations on a case where a communication abnormality occurs in the charging system 1 due to a cyber-attack on the charging system 1 for the reason of power theft, crashing the charging system 1 cause a confusion due to a political background, or threatening the company for ransom, etc.

On the other hand, the communication monitoring method of the present embodiment determines abnormality of the communication information in the charging system 1 based on the degree of power supply-demand tightness of the power grid 4. Therefore, the communication method of the present embodiment can make an abnormality determination on the communication information not conforming to the degree of power supply-demand tightness of the power grid 4.

Accordingly, the communication monitoring method of the present embodiment can detect a communication abnormality in the charging system 1 that can affect the power grid 4.

In addition, the communication monitoring method of the present embodiment monitors communication information exchanged by communication in the charging system 1, and determines abnormality of the communication information based on the degree of power supply-demand tightness. Therefore, the communication monitoring method of the present embodiment can quickly detect a communication abnormality in addition to the above effects.

In addition, the communication monitoring method of the present embodiment can improve overall safety of the charging system 1 and the power grid 4.

In addition, in the communication monitoring method of the present embodiment, in a case where the communication information satisfies the abnormality determination rule that corresponds to the degree of power supply-demand tightness, the communication information is determined as abnormal.

Accordingly, in addition to the above effect, the communication monitoring method of the present embodiment can easily make an abnormality determination on the communication information not conforming to the degree of power supply-demand tightness of the power grid 4 by using the abnormality determination rule.

In the communication monitoring method of the present embodiment, in a case where the degree of power supply-demand tightness indicates the high supply-demand tightness equal to or higher than a predetermined supply-demand tightness and in a case where the communication information satisfies an abnormality determination rule corresponding to the high supply-demand tightness and defining, as abnormal, the communication information related to at least one of the power consumption increase in the charging system 1 or restriction on discharging to the power grid 4, the communication information is determined as abnormal.

Accordingly, in addition to the above effect, in a case where the degree of power supply-demand tightness indicates a high supply-demand tightness equal to or higher than a predetermined supply-demand tightness, the communication monitoring method of the present embodiment can make an abnormality determination on the communication information related to at least one of the increase in power consumption in the charging system 1 or restriction on discharging to the power grid 4.

In addition, in the communication monitoring method of the present embodiment, in a case where the degree of power supply-demand tightness indicates the high supply-demand tightness equal to or higher than a predetermined supply-demand tightness and in a case where the communication information satisfies the abnormality determination rule corresponding to the high supply-demand tightness and defining, as abnormal, the communication information related to at least one of the fast charging permission of supplying power equal to or greater than the first threshold from the charger 60 to the mobile body 5, the discharging restriction on the power storage apparatus 50 provided in the charging system 1, the discharging restriction on the power generation apparatus 40 provided in the charging system 1, or the power measurement result indicating an increase of the total power consumption in the charging system 1 by at least the second threshold, the communication information is determined as abnormal.

Accordingly, in addition to the above effect, in a case where the degree of power supply-demand tightness indicates the high supply-demand tightness equal to or higher than the predetermined supply-demand tightness, the communication monitoring method of the present embodiment can make an abnormality determination on communication information related to at least one of a fast charging permission of supplying power equal to or greater than the first threshold from the charger 60 to the mobile body 5, a discharging restriction on the power storage apparatus 50 provided in the charging system 1, a discharging restriction on the power generation apparatus 40 provided in the charging system 1, or a power measurement result indicating an increase in total power consumption in the charging system 1 by at least the second threshold.

In addition, in the communication monitoring method of the present embodiment, in a case where the degree of power supply-demand tightness indicates the low supply-demand tightness less than a predetermined supply-demand tightness and in a case where the communication information satisfies an abnormality determination rule that corresponding to the low supply-demand tightness and defining, as abnormal, the communication information related to at least one of the power consumption suppression in the charging system or an increase in the discharging power to the power grid, the communication information is determined as abnormal.

Accordingly, in addition to the above effect, in a case where the degree of power supply-demand tightness indicates the low supply-demand tightness less than the predetermined supply-demand tightness, the communication monitoring method of the present embodiment can make an abnormality determination on the communication information related to at least one of the power consumption suppression of the charging system 1 or an increase in the discharging power to the power grid 4.

In addition, in the communication monitoring method of the present embodiment, in a case where the degree of power supply-demand tightness indicates the low supply-demand tightness less than the predetermined supply-demand tightness and in a case where the communication information satisfies the abnormality determination rule corresponding to the low supply-demand tightness and defining, as abnormal, the communication information related to at least one of the restriction on charging from the charger 60 to the mobile body 5, discharging of the power storage apparatus 50 provided in the charging system 1 and in which the charging rate is equal to or less than the predetermined charging rate, or discharging of the power generation apparatus 40 provided in the charging system 1 and in which the power generation rate is equal to or less than the predetermined power generation rate, the communication information is determined as abnormal.

Accordingly, in addition to the above effect, in a case where the degree of power supply-demand tightness indicates the low supply-demand tightness less than the predetermined supply-demand tightness, the communication monitoring method of the present embodiment can make an abnormality determination on the communication information related to at least one of the restriction on charging from the charger 60 to the mobile body 5, discharging of the power storage apparatus 50 provided in the charging system 1 and in which the charging rate is equal to or less than the predetermined charging rate, or discharging of the power generation apparatus 40 provided in the charging system 1 and in which the power generation rate is equal to or less than the predetermined power generation rate.

The communication monitoring method according to the present embodiment outputs the determination result of communication information.

Accordingly, in addition to the above effect, the communication monitoring method of the present embodiment can provide the user with the determination result.

The present embodiment has described an exemplary configuration in which the charging system 1 includes the communication monitoring apparatus 80. However, the communication monitoring apparatus 80 may be provided outside the charging system 1. In this case, the switching hub 30 only needs to have a configuration in which all the communication information exchanged by communication in the charging system 1 is to be transferred to the communication monitoring apparatus 80 provided outside the charging system 1.

Next, a hardware configuration of the system controller 20 and the communication monitoring apparatus 80 according to the present embodiment will be described.

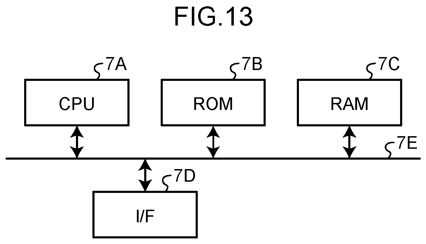

FIG. 13 is a block diagram illustrating a hardware configuration example of the system controller 20 and the communication monitoring apparatus 80 according to the present embodiment.

The system controller 20 and the communication monitoring apparatus 80 of the present embodiment each include a control apparatus such as a Central Processing Unit (CPU) 7A, a storage apparatus such as Read Only Memory (ROM) 7B and Random Access Memory (RAM) 7C, an I/F 7D that is connected to a network to perform communication, and a bus 7E that connects the individual units.

The program executed by the system controller 20 and the communication monitoring apparatus 80 of the present embodiment is provided by being preassembled in the ROM 7B, etc.

The program executed by the system controller 20 and the communication monitoring apparatus 80 according to the present embodiment may be provided as a computer program product by being recorded as a file in an installable format or an executable format in a computer-readable recording medium such as a Compact Disk Read Only Memory (CD-ROM), a flexible disk (FD), a Compact Disk Recordable (CD-R), or a Digital Versatile Disk (DVD).

The programs executed on the system controller 20 and the communication monitoring apparatus 80 of the present embodiment may be stored on a computer connected to a network such as the Internet and be provided by downloading via a network. In addition, the programs executed on the system controller 20 and the communication monitoring apparatus 80 of the present embodiment may be provided or distributed via a network such as the Internet.

The program executed by the system controller 20 and the communication monitoring apparatus 80 of the present embodiment can allow a computer to function as the system controller 20 and the communication monitoring apparatus 80 described in the present embodiment. In this computer, the CPU 7A can read a program from a computer-readable storage medium onto a main storage apparatus and execute the program.

Note that the present technology can also have the following configurations.
(1) A communication monitoring method executed by a communication monitoring apparatus configured to monitor communication information in a charging system including a charger configured to supply power to a mobile body, the method including:
   a power supply-demand tightness determination step of determining a degree of power supply-demand tightness of a power grid connected to the charging system; and
   an abnormality determination step of determining abnormality of the communication information based on the degree of power supply-demand tightness.
(2) The communication monitoring method according to (1),
   in which, in the abnormality determination step,
   in a case where the communication information satisfies an abnormality determination rule according to the degree of power supply-demand tightness, the communication information is determined as abnormal.
(3) The communication monitoring method according to (2),
   in which, in the abnormality determination step,
   in a case where the degree of power supply-demand tightness indicates a high supply-demand tightness equal to or higher than a predetermined supply-demand tightness and
   the communication information satisfies an abnormality determination rule corresponding to the high supply-demand tightness and defining, as abnormal, the communication information related to at least one of an increase in power consumption in the charging system and restriction on discharging to the power grid,
   the communication information is determined as abnormal.
(4) The communication monitoring method according to (2) or (3),
   in which, in the abnormality determination step,
   in a case where the degree of power supply-demand tightness indicates a high supply-demand tightness equal to or higher than a predetermined supply-demand tightness and
   the communication information satisfies the abnormality determination rule corresponding to the high supply-demand tightness and defining, as abnormal, the communication information related to at least one of a fast charging permission of supplying power equal to or greater than a first threshold from the charger to the mobile body, a discharging restriction on a power storage apparatus provided in the charging system, a discharging restriction on a power generation apparatus provided in the charging system, and a power measurement result indicating an increase in total power consumption in the charging system by at least a second threshold, the communication information is determined as abnormal.
(5) The communication monitoring method according to any one of (2) to (4),
   in which, in the abnormality determination step,
   in a case where the degree of power supply-demand tightness indicates a low supply-demand tightness less than a predetermined supply-demand tightness and
   the communication information satisfies an abnormality determination rule corresponding to the low supply-demand tightness and defining, as abnormal, the communication information related to at least one of power consumption suppression in the charging system and an increase in the discharging power to the power grid, the communication information is determined as abnormal.
(6) The communication monitoring method according to any one of (2) to (5),
   in which, in the abnormality determination step,
   in a case where the degree of power supply-demand tightness indicates a low supply-demand tightness less than a predetermined supply-demand tightness and
   the communication information satisfies the abnormality determination rule corresponding to the low supply-demand tightness and defining, as abnormal, the communication information related to at least one of restriction on charging from the charger to the mobile body, discharging of a power storage apparatus provided in the charging system and in which a charging rate is equal to or less than a predetermined charging rate, and discharging of a power generation apparatus provided in the charging system and in which a power generation rate is equal to or less than a predetermined power generation rate, the communication information is determined as abnormal.
(7) The communication monitoring method according to any one of (1) to (6), further including
   an output control step of outputting a determination result on the communication information.
(8) A communication monitoring apparatus configured to monitor communication information in a charging system including a charger configured to supply power to a mobile body, the communication monitoring apparatus including:
   a power supply-demand tightness determination unit configured to determine a degree of power supply-demand tightness of a power grid connected to the charging system; and
   an abnormality determination unit configured to determine abnormality of the communication information based on the degree of power supply-demand tightness.
(9) A communication monitoring program executed by a computer configured to monitor communication information in a charging system including a charger configured to supply power to a mobile body, the communication monitoring program including:
   a power supply-demand tightness determination step of determining a degree of power supply-demand tightness of a power grid connected to the charging system; and
   an abnormality determination step of determining abnormality of the communication information based on the degree of power supply-demand tightness.

In the description of embodiments of the present disclosure, the embodiments have been presented as examples, and are not intended to limit the scope of the invention. The above novel embodiments can be implemented in various other forms, with various omissions, substitutions, alterations without departing from the scope and spirit of the invention. In addition, the above embodiment is included in the scope and spirit of the invention, and is included in the invention described in the claims and the equivalent scope thereof.

### EXPLANATIONS OF LETTERS OR NUMERALS

1 CHARGING SYSTEM
4 POWER GRID
5 MOBILE BODY
40 POWER GENERATION APPARATUS
50 POWER STORAGE APPARATUS
60 CHARGER
70 POWER METER
80 COMMUNICATION MONITORING APPARATUS
88A POWER SUPPLY - DEMAND TIGHTNESS DETERMINATION UNIT
88B ABNORMALITY DETERMINATION RULE IDENTIFYING UNIT
88C COMMUNICATION INFORMATION ACQUISITION UNIT
88D ABNORMALITY DETERMINATION UNIT
88E OUTPUT CONTROL UNIT

## Claims

1. A communication monitoring method executed by a communication monitoring apparatus configured to monitor communication information in a charging system including a charger configured to supply power to a mobile body, the method comprising:
a power supply-demand tightness determination step of determining a degree of power supply-demand tightness of a power grid connected to the charging system; and
an abnormality determination step of determining abnormality of the communication information based on the degree of power supply-demand tightness.

2. The communication monitoring method according to claim 1,
wherein, in the abnormality determination step,
in a case where the communication information satisfies an abnormality determination rule according to the degree of power supply-demand tightness, the communication information is determined as abnormal.

3. The communication monitoring method according to claim 2,
wherein, in the abnormality determination step,
in a case where the degree of power supply-demand tightness indicates a high supply-demand tightness equal to or higher than a predetermined supply-demand tightness and
the communication information satisfies an abnormality determination rule corresponding to the high supply-demand tightness and defining, as abnormal, the communication information related to at least one of an increase in power consumption in the charging system and restriction on discharging to the power grid,
the communication information is determined as abnormal.

4. The communication monitoring method according to claim 2,
wherein, in the abnormality determination step,
in a case where the degree of power supply-demand tightness indicates a high supply-demand tightness equal to or higher than a predetermined supply-demand tightness and
the communication information satisfies the abnormality determination rule corresponding to the high supply-demand tightness and defining, as abnormal, the communication information related to at least one of a fast charging permission of supplying power equal to or greater than a first threshold from the charger to the mobile body, a discharging restriction on a power storage apparatus provided in the charging system, a discharging restriction on a power generation apparatus provided in the charging system, and a power measurement result indicating an increase in total power consumption in the charging system by at least a second threshold, the communication information is determined as abnormal.

5. The communication monitoring method according to claim 2,
wherein, in the abnormality determination step,
in a case where the degree of power supply-demand tightness indicates a low supply-demand tightness less than a predetermined supply-demand tightness and
the communication information satisfies an abnormality determination rule corresponding to the low supply-demand tightness and defining, as abnormal, the communication information related to at least one of power consumption suppression in the charging system and an increase in the discharging power to the power grid, the communication information is determined as abnormal.

6. The communication monitoring method according to claim 2,
wherein, in the abnormality determination step,
in a case where the degree of power supply-demand tightness indicates a low supply-demand tightness less than a predetermined supply-demand tightness and
the communication information satisfies the abnormality determination rule corresponding to the low supply-demand tightness and defining, as abnormal, the communication information related to at least one of restriction on charging from the charger to the mobile body, discharging of a power storage apparatus provided in the charging system and in which a charging rate is equal to or less than a predetermined charging rate, and discharging of a power generation apparatus provided in the charging system and in which a power generation rate is equal to or less than a predetermined power generation rate, the communication information is determined as abnormal.

7. The communication monitoring method according to claim 1, further comprising:
an output control step of outputting a determination result on the communication information.

8. A communication monitoring apparatus configured to monitor communication information in a charging system including a charger configured to supply power to a mobile body, the communication monitoring apparatus comprising:
a power supply-demand tightness determination unit configured to determine a degree of power supply-demand tightness of a power grid connected to the charging system; and
an abnormality determination unit configured to determine abnormality of the communication information based on the degree of power supply-demand tightness.

9. A communication monitoring program executed by a computer configured to monitor communication information in a charging system including a charger configured to supply power to a mobile body, the communication monitoring program comprising:
a power supply-demand tightness determination step of determining a degree of power supply-demand tightness of a power grid connected to the charging system; and
an abnormality determination step of determining abnormality of the communication information based on the degree of power supply-demand tightness.
